# EUROPEAN PATENT SPECIFICATION

(11) **EP 3 000 016 B1**
(45) Date of publication and mention of the grant of the patent: **07.08.2019**
(21) Application number: 14801404.6
(22) Date of filing: 14.05.2014
(51) Int. Cl.: G06F 3/041, G06F 3/033, G06F 3/048, G06F 3/0488, H04M 1/247

(54) **USER INPUT USING HOVERING INPUT**
BENUTZEREINGABE UNTER VERWENDUNG EINER SCHWEBENDEN EINGABE
ENTRÉE UTILISATEUR PAR ENTRÉE EN SURVOL

(30) Priority: 21.05.2013 US 201313899273
(43) Date of publication of application: 30.03.2016
(73) Proprietor: Samsung Electronics Co., Ltd., Suwon-si, Gyeonggi-do 443-742 (KR)
(72) Inventor: YIM, Sae-Mee, Suwon-si Gyeonggi-do 443-710 (KR); JEONG, Jin-Hong, Yongin-si Gyeonggi-do 448-544 (KR); HWANG, Soo-Ji, Suwon-si Gyeonggi-do 443-848 (KR)
(74) Representative: Jacobs, Bart
(86) International application number: PCT/KR2014/004308
(87) International publication number: WO 2014/189225

(56) References cited:
- EP-A2- 2 172 834
- US-A1- 2009 058 829
- US-A1- 2010 137 027
- US-A1- 2011 053 641
- US-A1- 2012 050 007
- US-A1- 2012 050 210
- US-A1- 2012 262 407
- US-A1- 2012 287 086

## Description

### Technical Field

Various embodiments disclosed herein relate generally to techniques for input to an electronic device.

### Background Art

There is a trend toward providing an electronic device with a touch screen display to enable a user of the electronic device to interact with the electronic device through a touch to the touch screen display. However, the touch screen display is limited in the resolution in which the touch can be detected. Accordingly, the touch screen display is less than ideal for functions such as handwriting recognition. To address this shortcoming of the touch screen display, there is a trend toward additionally providing the electronic device with an additional interface, such as a pen type interface. An exemplary technology for implementing a pen type interface is Electo-Magnetic Resonance (EMR) technology.

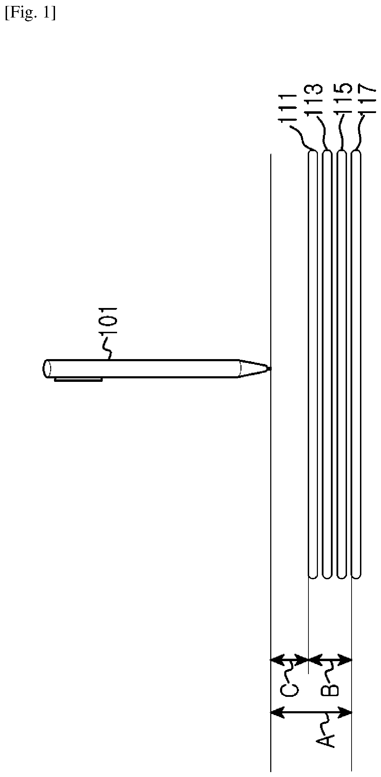

When EMR technology is employed, coordinates of an EMR type pen can be detected even if the EMR type pen does not touch a surface of an EMR sensor. For example, detection of the EMR type pen is possible even in a case where the EMR type pen is hanging in the air at a short distance from the surface of the EMR sensor. On the other hand, an EMR type pen system does not input erroneous coordinates when something other than the EMR type pen, such as a human hand, inadvertently touches the surface of the EMR sensor. The operation of an EMR type pen is explained below with reference to FIG. 1.

FIG. 1 illustrates a structure including a touch screen display and an EMR type pen system according the related art.

Referring to FIG. 1, a structure including a touch screen display and an EMR type pen system includes a protective layer 111, a touch sensor layer 113, a display layer 115, and an EMR sensor layer 117. The protective layer 111 serves to protect the other layers and also serves as a surface against which the touch and/or an EMR type pen 101 may be pressed. The touch sensor layer 113 serves to sense the touch to the protective layer 111. The display layer 115 serves as to provide a display. The EMR sensor layer 117 serves to detect the EMR type pen 101.

The EMR type pen 101 may be detected within a distance A from the sensor layer 115, which is greater than the combined thickness B of the protective layer 111, the touch sensor layer 113, and the display layer 115. For example, the EMR type pen 101 is detectible when it is located within a proximity range C from the protective layer 111.

Accordingly, an electronic device employing EMR technology may recognize an EMR type pen while it is hovering midair over the electronic device within the proximity range. Thus, the electronic device may detect an input corresponding to the state where the EMR type pen is detected while hovering midair over the electronic device within the proximity range. This type of input may be referred to as a hovering input. For example, when the electronic device is displaying a photo album, the electronic device can display a preview window of an image over which the hovering input is detected.

However, the hovering input is not limited to the above example. Rather, the hovering input is any type of secondary input at an area on a touch screen display. Alternatively or additionally, the hovering input may be any type of input where the input is detected while the input instrument or user's finger is above the display. Further, the hovering input is not limited to the use of the EMR type pen as described in above example. Rather, the hovering input may be implemented when any of various other types of input technology are employed. For example, the hovering input may also be implemented when an optical type, an InfraRed (IR) type, a surface acoustic wave type, an ultrasonic wave type, an air touch type, a contactable pen type, a surface capacitance type, and any other suitable and/or similar type of input technology are employed.

Patent Document US2012/0050007 A1 discloses a method for interacting with a device whereby the user can move the cursor through the user interface by hovering a finger over the display. In order to select an icon marked by the cursor the user has to generate a specific sound within a period of type after the finger stays over the icon.

Patent Document US2011/0053641 A1 discloses a method for providing an input on a mobile device based on tapping on the device's bezel or shaking the device. Several patterns generated by tapping or shaking can be used in order to trigger different functionalities.

Patent Document US2010/0137027 A1 discloses a method for interacting with a mobile device for the activation of some functionality based on the detection of two sequential events: first the detection of a finger touching or being close to a predefined region related to a hardware module of the device and then the detection of a drag directed to the display of the device.

The above information is presented as background information only to assist with an understanding of the present disclosure. No determination has been made, and no assertion is made, as to whether any of the above might be applicable as prior art with regard to the present invention.

### Disclosure of Invention

### Solution to Problem

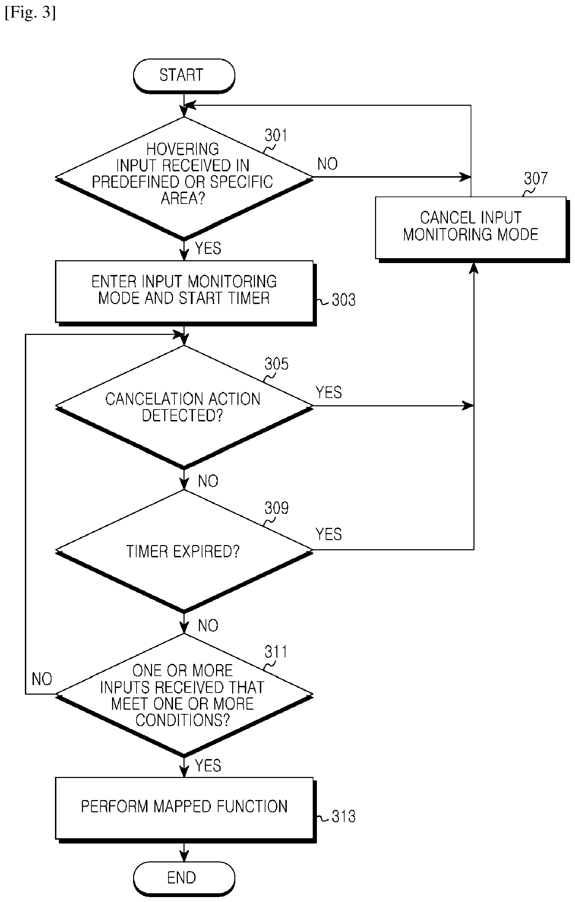

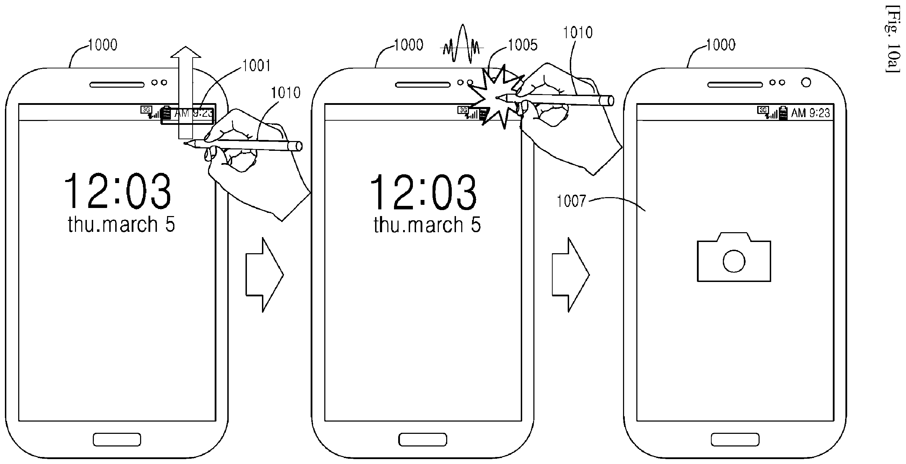

The invention is set out in the appended claims. The reader should bear in mind that some embodiments or examples of the description may not comprise all features of the invention as claimed. The invention as claimed is best understood based on the disclosure regarding the figures 3 and 10a. electronic device; determining whether a second input is received from at least one sensor of the electronic device after the first input is received in the predefined area; and performing a function corresponding to the predefined area when the second input corresponds with at least one predefined condition.

### Brief Description of Drawings

Aspects, features, and advantages of various embodiments of the present invention will be more apparent from the following description taken in conjunction with the accompanying drawings, in which:
FIG. 1 illustrates a structure including a touch screen display and an Electo-Magnetic Resonance (EMR) type pen system according the related art;
FIG. 2 illustrates a structure of an electronic device for an input using a hovering input according to various embodiments of the present invention;
FIG. 3 illustrates a method for an input using a hovering input for an electronic device according to various embodiments of the present invention;
FIG. 4A illustrates examples of predefined or specific areas for an input using a hovering input according to various embodiments of the present invention;
FIG. 4B illustrates a method for a user to map a function to a predefined or specific area that is performed by an input using a hovering input according to various embodiments;
FIG. 5 illustrates a first various implementation in which a volume key is operated via an input using a hovering input according to a first exemplary embodiment;
FIG. 6 illustrates a second various implementation in which a volume key is operated via an input using a hovering input according to the first exemplary embodiment;
FIG. 7 illustrates a third various implementation in which a power key is operated via an input using a hovering input according to the first exemplary embodiment;
FIG. 8 illustrates a fourth various implementation in which an option key is operated via an input using a hovering input according to the first exemplary embodiment;
FIG. 9 illustrates a fifth various implementation in which a back key is operated via an input using a hovering input according to the first exemplary embodiment;
FIG. 10A illustrates a sixth various implementation in which a camera function is operated via an input using a hovering input according to a second exemplary embodiment;
FIG. 10B illustrates a method of the sixth exemplary implementation in which a camera function is operated via an input using a hovering input according to a third exemplary embodiment;
FIG. 11 illustrates a seventh various implementation in which a Uniform Resource Locator (URL) address bar of a browser is displayed in response to an input using a hovering input according to the third exemplary embodiment;
FIG. 12 illustrates an eighth various implementation in which a search bar of a phonebook is displayed in response to an input using a hovering input according to the third exemplary embodiment;
FIG. 13 illustrates a ninth various implementation in which a search bar of an Instant Messaging (IM) application is displayed in response to an input using a hovering input according to the third exemplary embodiment;
FIG. 14 illustrates a tenth various implementation in which a back page function of a browser is performed in response to an input using a hovering input according to the third exemplary embodiment; and
FIG. 15 illustrates an eleventh various implementation in which a forward page function of a browser is performed in response to an input using a hovering input according to the third exemplary embodiment.

Throughout the drawings, like reference numerals will be understood to refer to like parts, components, and structures.

### Best Mode for Carrying out the Invention

The following description with reference to the accompanying drawings is provided to assist in a comprehensive understanding of various embodiments of the invention as defined by the claims.

The terms and words used in the following description and claims are not limited to the bibliographical meanings, but, are merely used by the inventor to enable a clear and consistent understanding of the invention.

It is to be understood that the singular forms "a," "an," and "the" include plural referents unless the context clearly dictates otherwise. Thus, for example, reference to "a component surface" includes reference to one or more of such surfaces.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, the term "about" is used to provide flexibility to a numerical range endpoint by providing that a given value may be "a little above" or "a little below" the endpoint.

In the related art, a hovering input of an electronic device is merely used for simple functions such as a preview function. However, the hovering input can be used for other types of input of an electronic device, such as the input events of the various embodiments described herein.

As used herein, the term "Non-Contact-Type (NCT) pen" refers to a device whose coordinates relative to an input sensor are detectable by the input sensor within a distance therefrom. The input may be shaped like a pen or a stylus and thus may be held in the hand of a user in a similar manner as the pen or stylus. One example of an NCT pen input is an electromagnetic induction-type pen. An example of an electromagnetic induction-type pen is an Electo-Magnetic Resonance (EMR) type pen.

As used herein, the term "hovering input" refers to an input where coordinates of the input are detected while an object used for performing the input is within a proximity range above an external surface of an electronic device. Examples of the object include a finger, a stylus, a pen such as an NCT pen, etc. Also, the term "hovering input" refers to an input from various types of input units, such as an optical type input unit, an infra-red type input unit, a surface acoustic wave type input unit, an ultrasonic wave type input unit, a surface capacitance type input touch screen panel input unit, an NCT pen input unit, and any other type of input unit.

The term "input using the hovering input" refers to an input event that is detected within a range of coordinates and within a period of time as determined by a timer from when a hovering input is detected, upon the detection by one or more sensor devices that one or more inputs meet one or more conditions.

The term "predefined or specific area" refers to an area within a range of coordinates within which the hovering input is detected for a corresponding input event using the hovering input.

The term "input monitoring mode" refers to a mode during which one or more sensors are monitored for one or more inputs that meet one or more conditions to determine if an input event occurs.

The term "input monitoring cancel area" refers to a line or range of coordinates in which, if the hovering input is detected during the input monitoring mode, the input monitoring mode is canceled.

In the present disclosure, the term "electronic device" may be a portable electronic device, a smart phone, a portable terminal, a mobile phone, a mobile pad, a media player, a tablet computer, a handheld computer, or a Personal Digital Assistant (PDA). However, the present invention is not limited thereto, and the electronic device may be any suitable and/or similar electronic device.

Herein, various embodiments of the present invention are directed toward techniques for an input using a hovering input in an electronic device. According to various embodiments of the present invention, the techniques discussed herein enable a function associated with an input event to be performed, after generating a hovering input at a predefined or specific area, if one or more inputs are detected by one or more sensor devices that meet one or more conditions within a predefined time determined by a timer. The techniques described herein may enable a user to cause a function associated with an input event to be performed by swiping a hovering input from a display screen to off the display screen and then subsequently performing an action that causes one or more inputs to be detected by one or more sensors that meet one or more conditions within a predefined time determined by a timer. The function mapped to the input event may be at least one of an operation corresponding to a key of the electronic device, an operation corresponding to a hardware module of electronic device, and an operation of an Operating System (OS) of the electronic device, and an operation of an application of the electronic device.

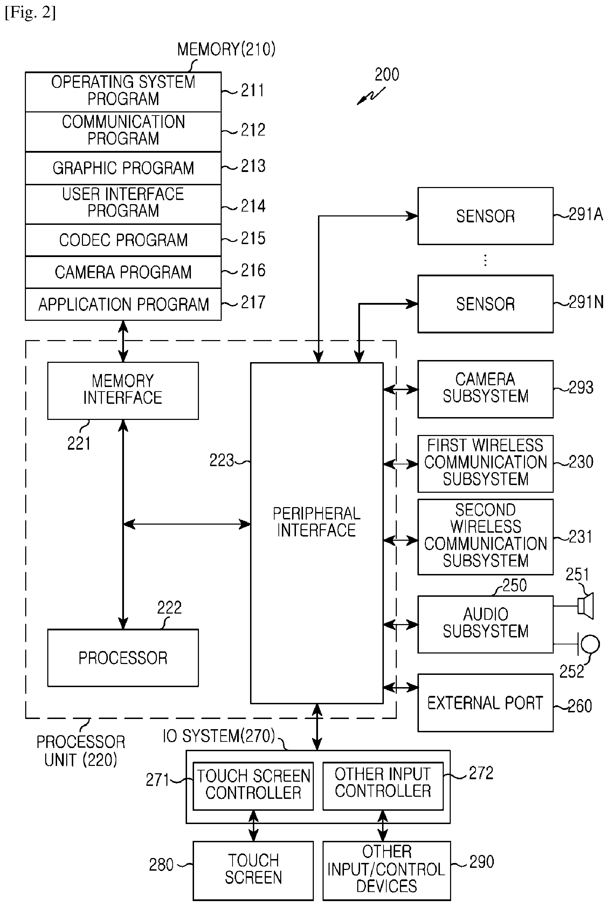

FIG. 2 illustrates a structure of an electronic device for an input using a hovering input according to various embodiments.

Referring to FIG. 2, the electronic device 200 includes a memory 210, a processor unit 220, a first wireless communication subsystem 230, a second wireless communication subsystem 231, an audio subsystem 250, a speaker 251, a microphone 252, an external port 260, an Input Output (IO) system 270, a touch screen 280, other input/ control devices 290, sensor 291A through sensor 291N, and a camera subsystem 293. The various components of the electronic device 200 can be coupled using one or more communication buses or one or more stream lines. Herein, a plurality of memories 210 and a plurality of external ports 260 can be used.

The processor unit 220 can include a memory interface 221, one or more processors 222, and a peripheral interface 223. The processor unit 220 may be referred to herein as a processor.

The processor unit 220 controls overall operations of the electronic device 200. The processor unit 220 executes code to have performed or to perform any of the functions/ operations/algorithms/roles explicitly or implicitly described herein as being performed by an electronic device. For example, the processor unit 220 controls the electronic device 200 to perform the techniques described herein for an input using a hovering input of the electronic device 200. The term "code" may be used herein to represent one or more of executable instructions, operand data, configuration parameters, and other information stored in the memory 210.

In particular, the one or more processors 222 control the electronic device 200 to provide various multimedia services using at least one software program. In so doing, the one or more processors 222 can execute at least one program stored in the memory 210 and provide the service of the corresponding program.

The one or more processors 222 can include a plurality of processors for different functions. For example, the one or more processors 222 can include at least one of one or more data processors, an image processor, a codec, etc.

The peripheral interface 223 interconnects the IO subsystem 270 and at least one peripheral of the electronic device 200, with the one or more processors 222 and the memory interface 221.

The memory interface 221 controls access of the component such as the one or more processors 222 or peripheral interface 223, to the memory 210.

The electronic device 200 performs at least one of a voice communication function and a data communication function through one or more wireless communication subsystems 230 and 231.

The first wireless communication subsystem 230 and the second wireless communication subsystem 231 can be distinguished based on a communication network of the electronic device 200. For example, the communication network can include at least one of, but not limited to, a Global System for Mobile communication (GSM) network, an Enhanced Data GSM Environment (EDGE) network, a Code Division Multiple Access (CDMA) network, a Wideband Code Division Multiple Access (W-CDMA) network, a Long Term Evolution (LTE) network, an Orthogonal Frequency Division Multiple Access (OFDMA) network, a Wireless Fidelity (Wi-Fi) network, a WiMax network, a Bluetooth network, and/or the like. The electronic device 200 may integrate the first wireless communication subsystem 230 and the second wireless communication subsystem 231 into a single wireless communication subsystem.

The audio subsystem 250 can be coupled to the speaker 251 and the microphone 252 to process input and output of audio streams for voice recognition, voice reproduction, digital recording, and telephone function. For example, the audio subsystem 250 provides an audio interface with the user through the speaker 251 and the microphone 252. For example, when receiving a data signal through the peripheral interface 223 of the processor unit 220, the audio subsystem 250 converts the data stream to an electric signal and sends the electric signal to the speaker 251. The speaker 251 converts the electric signal to a sound wave audible by the user and outputs the sound wave. The microphone 252 converts the sound wave from the user or other sound sources to an electric signal and sends the electric signal to the audio subsystem 250. The audio subsystem 250 converts the electric signal received from the microphone 252 to the audio data signal and sends the audio data signal to the peripheral interface 223. At this time, the audio subsystem 250 can include an attachable and detachable ear phone, head phone, or head set.

The external port 260 is used to connect the electronic device 200 directly to other electronic devices. The external port 260 can be referred to as, for example, but not limited to, a Universal Serial Bus (USB) port.

The IO subsystem 270 can include at least one of a touch screen controller 271 and other input controller 272. The touch screen controller 271 can be coupled to the touch screen 280 to control the signal input/output of the touch screen 280. The other input controller 272 can be coupled to the other input/control devices 290 to control the signal input/output of the other input/control device 290. The other input/control device 290 may sense the position of a hovering input when an object used to perform the hovering input is within a proximity range.

The touch screen 280 provides an IO interface between the electronic device 200 and the user. For example, the touch screen 280 forwards the user's touch input to the electronic device 200. In association with the touch screen controller 271, the touch screen 280 can detect the touch, the touch movement, and the touch release using, but not limited to, capacitive, resistive, infrared and surface sound wave techniques and a multi-touch detection technique including various proximity sensor arrays or other elements.

The touch screen 280 performs any of the functions/operations/roles explicitly or implicitly described herein as being performed by a display screen or a touch screen. For example, the touch screen 280 displays status information of the electronic device 200, a character input by the user, a moving picture, a still picture, etc. For example, the touch screen 280 provides a visual output to the user. Herein, the visual output can be represented as text, graphic, video, and a combination of these.

The touch screen 280 can employ various displays, examples of which include at least one of, but are not limited to, Liquid Crystal Display (LCD), Light Emitting Diode (LED), Light emitting Polymer Display (LPD), Organic LED (OLED), Active Matrix OLED (AMOLED), Flexible LED (FLED), and the like.

The other input/control devices 290 include at least one of one or more hardware buttons, a rocker switch, a thumb wheel, a dial, a stick, a pointer such as stylus, and the like.

The sensor 291A through sensor 291N are coupled to the peripheral interface 223 to provide information for the operation of the electronic device 200 to the processor unit 220. For example, the sensor 291A through sensor 291N may collectively or individually sense a range of properties. The sensor 291A through sensor 291N are may include at least one of an accelerometer, a gyroscope, a vibration sensor, a microphone, a positioning subsystem, a temperature sensor, a bionic sensor, a digital compass, an optical sensor, etc. However, the present invention is not limited thereto, and the sensor 291A through sensor 291N may be any suitable and/or similar unit for sensing a characteristic, condition, state, or action.

The camera subsystem 293 can perform camera functions such as photo and video clip recording. The camera subsystem 293 can include an optical sensor employing a Charged Coupled Device (CCD), a Complementary Metal-Oxide Semiconductor (CMOS) device, or the like.

The memory 210 can be coupled to the memory interface 221. The memory 210 can include fast random access memory such as one or more magnetic disc storage devices and/or non-volatile memory, one or more optical storage devices, and/or a flash memory (e.g., NAND and NOR).

The memory 210 stores one or more of executable instructions, code, operand data, configuration parameters, and other information used for the operations of the electronic device 200 described herein and various data including any of the data discussed herein as being received, transmitted, retained, generated, or used by the electronic device 200. For example, memory 210 may store mapping information between one or more input events corresponding to respective predefined or specific areas and functions. Further, the memory 210 stores at least one program. For example, the memory 210 includes an operating system program 211, a communication program 212, a graphic program 213, a user interface program 214, a codec program 215, a camera program 216, and one or more application programs 217. The program stored in the memory 210 may be represented as an instruction set which is a set of instructions.

The operating system program 211 includes various software components for controlling general system operations. The operating system program 211 includes software components for memory management and control, storage hardware (device) control and management, and power control and management. The operating system program 211 processes the normal communication between various hardware devices and the software components (modules). The operating system program 211 includes any one of WINDOWS, LINUX, Darwin, RTXC, UNIX, OS X, VxWorks, and the like.

The communication program 212 allows communication with other electronic devices such as computer, server, and/or portable terminal, through the wireless communication subsystems 230 and 231 or the external port 260.

The graphic program 213 includes various software components for providing and displaying graphics on the touch screen 280. The term 'graphics' includes text, webpage, icon, digital image, video, animation, and the like.

The user interface program 214 includes various software components relating to a user interface. In this case, the user interface program 214 is involved in the status change of a user interface and the condition of the user interface status change.

The codec program 215 can include software components regarding video file encoding and decoding. The codec program 215 can include a video stream module such as MPEG module and/or H204 module. The codec program 215 can include a codec module for various audio files such as Authentication, Authorization, and Accounting (AAA), Adaptive Multi Rate (AMR), Windows Media Audio (WMA), and the like.

The camera program 216 includes camera related software components for camera related processes and functions.

The one or more application programs 217 include a browser, an e-mail, an instant message, a word processing, keyboard emulation, an address book, a touch list, a widget, Digital Right Management (DRM), voice recognition, voice reproduction, a position determining function, a location based service, and the like.

FIG. 3 illustrates a method for an input using a hovering input for an electronic device according to various embodiments.

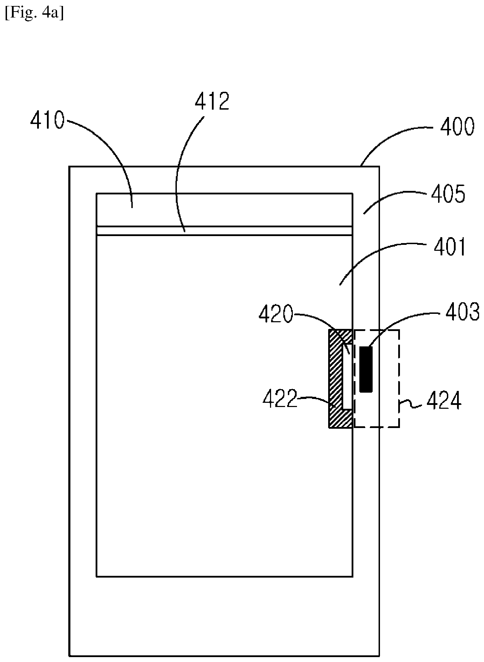

Referring to FIG. 3, the electronic device determines whether a hovering input is received in a predefined or specific area in step 301. Here, the electronic device may not receive the hovering input in the predefined or specific area until an object for performing the hovering input is detected within the predefined or specific area for at least a predefined amount of time determined by a timer. The electronic device also determines the coordinates of the object used to perform the hovering input and whether the hovering input is within a range of coordinates corresponding to the predefined or specific area. When determining whether the hovering input is within the range of coordinates corresponding to the predefined or specific area, the electronic device may determine whether the hovering input is within a range of coordinates corresponding to a present predefined or specific area. For example, the presence of one or more predefined or specific areas may vary over time, vary depending on a state of the electronic device, vary depending on an application presently operating and/or being displayed on the electronic device, vary depending on a setting by the user or manufacturer, etc. The predefined or specific area will be described further below with reference to FIG. 4A.

If the electronic device determines that the hovering input is not received in a predefined or specific area in step 301, the electronic device repeats step 301. Otherwise, if the electronic device determines that the hovering input is received in a predefined or specific area in step 301, the electronic device proceeds to step 303.

In step 303, the electronic device enters an input monitoring mode. Upon entering the input monitoring mode in step 303, the electronic device starts a timer. Here, the timer or an indicator corresponding to the timer may be displayed or otherwise indicated to a user. The timer may be started prior to entering the input monitoring mode, such as when the electronic device detects the hovering input. During the input monitoring mode, the electronic device may provide an indication that the electronic device is in the input monitoring mode. For example, the predefined or specific area may be visually distinguished. The predefined or specific area may be visually distinguished by, for example, shading or highlighting the predefined or specific area. In the case where the predefined or specific area is visually distinguished, an input monitoring cancel area may also be visually distinguished. Alternatively or additionally, an indicator may identify that the electronic device is in the input monitoring mode. For example, the display of an icon or an illumination may indicate to a user that the electronic device is in the input monitoring mode. Here, the indicator may additionally indicate the function that corresponds to the predefined or specific area, i.e., the function to which the input event is mapped. Alternatively or additionally, a sound or vibration may identify that the electronic device is in the input monitoring mode.

In step 305, the electronic device determines whether a cancelation action has been detected for which the input monitoring mode should be canceled. For example, the cancelation action may be the detection of the hovering input moving into and/or through an input monitoring cancel area. In this case, the action may only be detected if the hovering input has not returned to the predefined or specific area within a preset period of time.

If the electronic device determines that the cancelation action has been detected for which the input monitoring mode should be canceled in step 305, the electronic device cancels the input monitoring mode in step 307. Thereafter, the electronic device returns to step 301. If the electronic device determines that the cancelation action has not been detected for which the input monitoring mode should be canceled in step 305, the electronic device proceeds to step 309.

In step 309, the electronic device determines whether a predefined amount of time has passed since the timer was started. If the electronic device determines that the predefined amount of time has passed since the timer was started, the electronic device proceeds to step 307. Otherwise, if the electronic device determines that the preset amount of time has not passed since the timer was started, the electronic device proceeds to step 311.

In step 311, the electronic device determines whether one or more inputs are received that meet one or more conditions. The one or more inputs may be the result of one or more of a tapping of the electronic device with an object, such as on a bezel of the electronic device, a sound such as a whistle or a voice input, a motion of the electronic device, etc. To sense the one or more inputs, one or more sensors may be used including, but not limited to, an accelerometer, a gyroscope, a vibration sensor, a microphone, a light sensor, and a digital compass. Further, the one or more conditions may correspond to a certain type, duration, intensity, number of inputs, or other characteristics of the one or more inputs sensed. The one or more conditions may be selected so as to correspond to characteristics of the one or more inputs sensed when a specific action is performed, such as the tapping of the bezel of the electronic device with an object used to perform the hovering input. For example, if an accelerometer is used to determine whether the tapping of the bezel of the electronic device is performed with the object used to perform the hovering input, a sharp peak of acceleration may correspond to the tapping of a bezel of the electronic device with the object used to perform the hovering input. In this case, a condition that may be employed that is met by the sharp peak of acceleration corresponding to the tapping of the bezel of the electronic device with the object used to perform the hovering input.

In another example, if a microphone is used to determine whether a tapping of a bezel of the electronic device with the object used to perform the hovering input is performed, a sharp peak in a Fast Fourier Transform (FFT) of the audio input to the microphone will correspond to the tapping of a bezel of the electronic device with the object used to perform the hovering input. In this case, a condition may be employed that is met by the sharp peak in the FFT of the audio input to the microphone that corresponds to the tapping of the bezel of the electronic device with the object used to perform the hovering input.

When a plurality of conditions is employed, the electronic device may additionally determine which of the plurality of conditions is met. Here, a plurality of functions may be mapped to an input event, where each of the plurality of functions is further mapped to one of the plurality of conditions. Here, the plurality of conditions may correspond to one of long and short press event of a key associated with the input event.

When the one or more inputs are not received that meet the one or more conditions in step 311, the electronic device returns to step 305. Otherwise, when the one or more inputs are received that meet the one or more conditions in step 311, the electronic device proceeds to step 313. In step 313, the electronic device may cancel the input monitoring mode and may perform a function mapped to the input event in step 313. Thereafter, the method is ended.

The steps of the method described above with reference to FIG. 3 may be performed in an order that differs from the order described herein. In addition, one or more steps of the method described above with reference to FIG. 3 may be performed simultaneously.

FIG. 4A illustrates examples of predefined or specific areas for an input using a hovering input according to various embodiments.

Referring to FIG. 4A, an electronic device 400 is shown including a display screen 401, a key 403, and a bezel 405. As shown in FIG. 4A, two predefined or specific areas are shown, namely a predefined or specific area 410 and a predefined or specific area 420. Predefined or specific area 410 is an example of a predefined or specific area for a menu area or an application. Adjacent to the predefined or specific area 410 is an input monitoring cancel area 412 corresponding to the predefined or specific area 410.

The predefined or specific area 420 is an example of a predefined or specific area for an adjacent key area 424 on the bezel 405. The adjacent key area 424 includes the key 403. Here, the predefined or specific area 420 corresponds to the key 403. Instead of or in addition to the key 403, the adjacent key area 424 may include an identifier of a function associated with the predefined or specific area 420, i.e., the function mapped to a corresponding ancillary hovering input. Further, instead of or in addition to the key 403, the adjacent key area 424 may include a hardware module such as a camera module. Here, at least a portion of the hardware module may be visible to a user of the electronic device 400 in the adjacent key area 424. Adjacent to the predefined or specific area 420 is an input monitoring cancel area 422 corresponding to the predefined or specific area 420.

As shown in FIG. 4A, the predefined or specific areas 410 and 420 may be disposed along an edge of the display screen 401. However, a predefined or specific area may be disposed so as not to be along an edge of the display screen 410. Further, while the predefined or specific areas 410 and 420 are shown as being rectangular, a predefined or specific area may be formed in any shape.

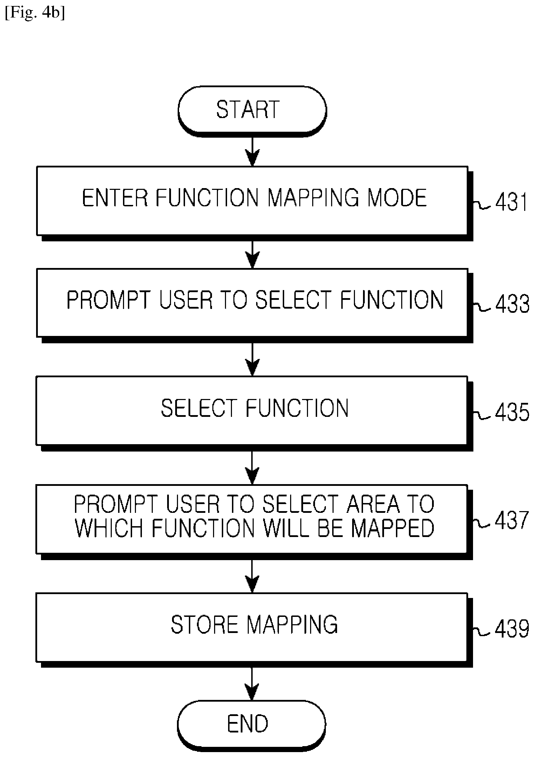

Herein, the electronic device 400 may include a technique for a user to map a function to a predefined or specific area that is performed by an input using a hovering input. The technique for a user to map a function to a predefined or specific area that is performed by an input using a hovering input is described below with reference to FIGS. 4A and 4B.

FIG. 4B illustrates a method for a user to map a function to a predefined or specific area that is performed by an input using a hovering input according to various embodiments.

Referring to FIGS. 4A and 4B, a user enters a function mapping mode in step 431. The user may enter the function mapping mode via a Graphical User Interface (GUI) of the electronic device 400. The user may then be prompted to select a function associated with one of a key, a hardware module, an application, etc. of the electronic device 400 in step 433. Thereafter, the user selection the function in step 435. For example, the user may select key 403. The user may select key 403 by pressing the key 403. Alternatively, the user may select key 403 via GUI of the electronic device 400. After the user selects the function, the user may then be prompted to select an area to which the function will be mapped in step 437. For example, the user my select area 420. Here, the area may be fixed in size and/or location. Alternatively, the user may select the size and/or location. The electronic device 400 then stores the mapping in step 439 and exits the function mapping mode.

According to various embodiments, the techniques discussed above enable a function associated with an ancillary hovering input to be performed, after generating a hovering input with an input at a predefined or specific area, if one or more inputs are detected by one or more sensors that meet one or more conditions within a predefined time determined by a timer. In effect, this enables a user to cause a function associated with an input using a hovering input to be performed by swiping a hovering input from a display screen to off the display screen and then subsequently performing a certain action that causes one or more inputs to be detected by one or more sensors that meet one or more conditions within a predefined time determined by a timer. The function mapped to the input using the hovering input may be at least one of an operation corresponding to a key of the electronic device, an operation corresponding to a hardware module of electronic device, and an operation of an OS of the electronic device, and an operation of an application of the electronic device.

It is noted that certain aspects of the techniques discussed herein may be at least one of configured, adjusted and selected by a user, manufacture, developer, etc. For example, any amount of time discussed herein may be configured, adjusted and selected by a user, manufacture, developer, etc. In another example, a function mapped to an input using a hovering input, which corresponds to a predefined or specific area, may be at least one of configured, adjusted and selected by a user, manufacture, developer, etc. In yet another example, the predefined or specific area may be at least one of configured, adjusted and selected by a user, manufacture, developer, etc. In still another example, the one or more conditions of the one or more inputs detected by one or more sensors may be at least one of configured, adjusted and selected by a user, manufacture, developer, etc. In a further example, anything described herein as being displayed or indicated to a user may be at least one of configured, adjusted and selected by a user, manufacture, developer, etc.

Hereafter, various exemplary embodiments including various exemplary implementations will be described that employ the techniques discussed above. For conciseness in the description of the various exemplary embodiments, it is assumed that characteristics of a physical tapping of a bezel of an electronic device by an object used to perform a hovering input is detected by one or more sensors as an input that meets one or more conditions. However, the present invention is not limited to this action. Rather, any of one or more characteristics of any of one or more actions may be detected by the one or more sensors as an input that meets one or more conditions. For example, a verbal command or a tilting of the electronic device may be used as the one or more inputs that meet the one or more conditions.

In addition, certain features or aspects of the techniques discussed in the present disclosure may not be expressly discussed with respect to a given exemplary implementation for conciseness in description. However, any of the various exemplary implementations described below may employ any of the features or aspects of the techniques discussed in the present disclosure. Further, any features or aspects discussed with respect to a given exemplary implementation are equally applicable to any other exemplary implementation or technique discussed in the present disclosure.

### 1) First Exemplary Embodiment

A first exemplary embodiment is described below with reference to first through fifth exemplary implementations. In the first exemplary embodiment, various keys of an electronic device are operated via an input using a hovering input. Examples of the keys include a volume key, an option key, and a back key.

### A. First Exemplary Implementation

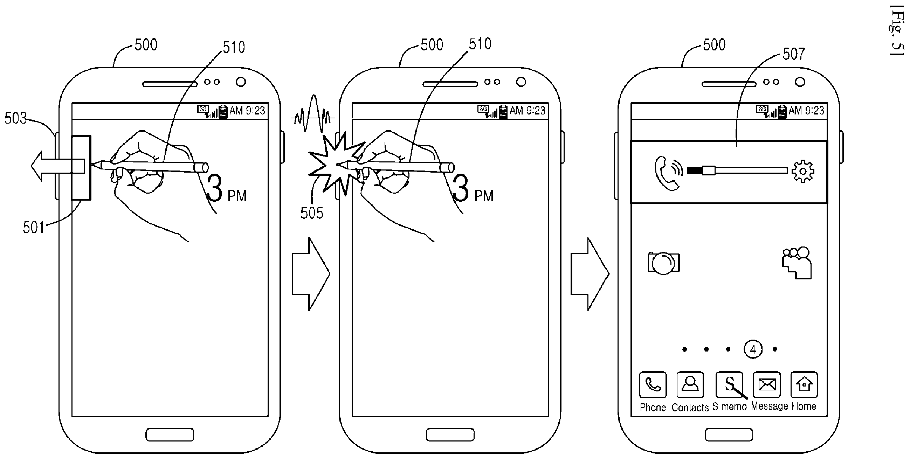

FIG. 5 illustrates a first exemplary implementation in which a volume key is operated via an input using a hovering input according to the first exemplary embodiment.

Referring to FIG. 5, after generating a hovering input with an object 510 used for performing the hovering input at a predefined or specific area 501 associated with a volume key 503, if an electronic device 500 is physically tapped 505 with the object 510 used for performing the hovering input within a preset time, the electronic device 500 can display a volume control User Interface (UI) 507. A user of the electronic device 500 can then manipulate the volume of the electronic device 500 using the volume control UI 507. Here, the object 510 used for performing the hovering input may be a NCT pen. The volume key 503 may be a hardware key, a capacitive key, or any other suitable type of key for adjusting the volume of the electronic device 500. The operation associated with the volume key 503 may be an operation of the OS or an application.

The volume key 503 may be located at a location on the electronic device 500 other than the side of the electronic device 500 including the display screen of the electronic device 500. Alternatively, the volume key 503 may be located on the same side of the electronic device 500 including the display screen of the electronic device 500. An edge of the predefined or specific area 501 may correspond to at least a portion of an edge of the display screen closest to the volume key 503.

### B. Second Exemplary Implementation

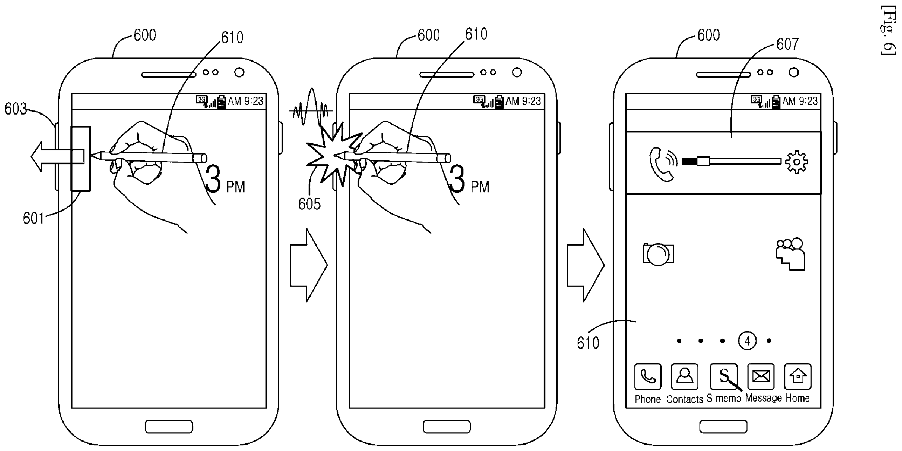

FIG. 6 illustrates a second exemplary implementation in which a volume key is operated via an input using a hovering input according to the first exemplary embodiment.

Referring to FIG. 6, after generating a hovering input with an object 610 used for performing the hovering input at a predefined or specific area 601 associated with a volume key 603, if an electronic device 600 is physically tapped 605 with the object 610 used for performing the hovering input within a preset time, the volume of the electronic device 600 can be adjusted based on a coordinate of a hovering position, e.g., upper or lower, within the predefined or specific area 601 after the tap 605. In this case, the electronic device 600 can display a volume control UI 607 to provide feedback to the user regarding the volume adjustment.

Here, the object 610 used for performing the hovering input may be a NCT pen. The volume key 603 may be a hardware key, a capacitive key, or any other suitable type of key for adjusting the volume of the electronic device 600. The volume key 603 may be located at a location on the electronic device 600 other than the side of the electronic device 600 including the display screen of the electronic device 600. Alternatively, the volume key 603 may be located on the same side of the electronic device 600 including the display screen of the electronic device 600. An edge of the predefined or specific area 601 may correspond to at least a portion of an edge of the display screen closest to the volume key 603.

### C. Third Exemplary Implementation

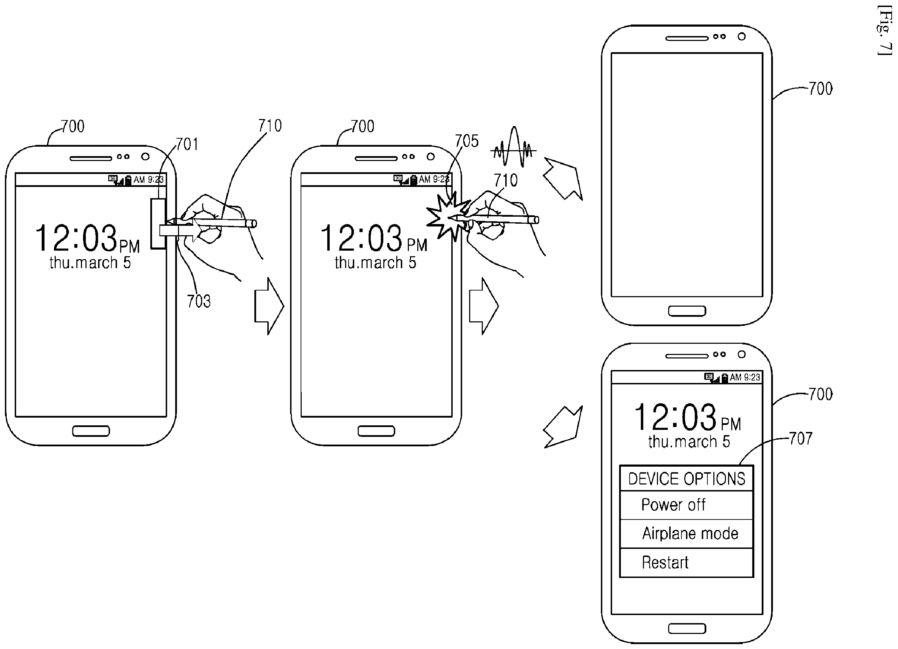

FIG. 7 illustrates a third exemplary implementation in which a power key is operated via an input using a hovering input according to the first exemplary embodiment.

Referring to FIG. 7, after generating a hovering input with an object 710 used for performing the hovering input on a predefined or specific area 701 associated with a power key 703, if a bezel of an electronic device 700 is physically tapped 705 by the object 710 used for performing the hovering input within a predefined time determined by a timer, the electronic device 700 can be turned off as if the power key 703 was actuated. Alternatively, after generating a hovering input with the object 710 used for performing the hovering input on the predefined or specific area 701 associated with the power key 703, if the bezel of the electronic device 700 is physically tapped 705 by the object 710 used for performing the hovering input within the predefined time determined by the timer, the electronic device 700 can display a power control UI 707, and a user of the electronic device 700 can turn off the electronic device 700 using the power control UI 707. Here, the electronic device 700 may be turned off or the power control UI 707 may be displayed depending on at least one of the strength, duration, or number of the tap. For example, the electronic device 700 may perform an operation that corresponds to one of long and short press event of the power key 703, depending on at least one of the strength, duration, or number of the tap 705. The operation associated with the power key 703 may be an operation of the OS or an application.

Here, the object 710 used for performing the hovering input may be a NCT pen. The power key 703 may be a hardware key, a capacitive key, or any other suitable type of key for toggling the power of the electronic device 700. The power key 703 may be located at a location on the electronic device 700 other than the side of the electronic device 700 including the display screen of the electronic device 700. Alternatively, the power key 703 may be located on the same side of the electronic device 700 including the display screen of the electronic device 700. An edge of the predefined or specific area 701 may correspond to at least a portion of an edge of the display screen closest to the power key 703.

### D. Fourth Exemplary Implementation

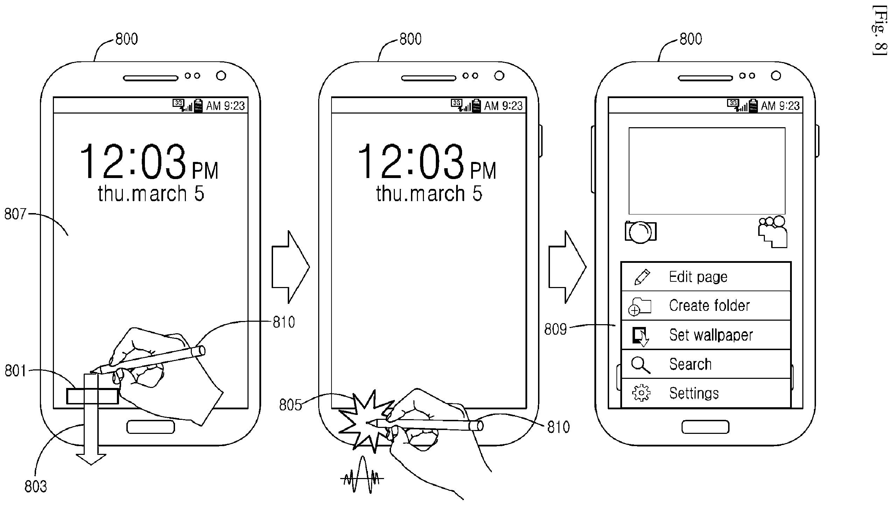

FIG. 8 illustrates a fourth exemplary implementation in which an option key is operated via an input using a hovering input according to the first exemplary embodiment.

Referring to FIG. 8, after generating a hovering input with an object 810 used for performing the hovering input on a predefined or specific area 801 associated with an option key 803, if the bezel is physically tapped 805 by the object 810 used for performing the hovering input within a predefined time determined by a timer, an electronic device 800 may then operate as if the option key 803 was actuated. In this case, the actuation of the option key 803 causes the electronic device 800 to transition from a home screen 807 to an option screen 809. The operation associated with the option key 803 may be an operation of the OS or an application.

Here, the object 810 used for performing the hovering input may be a NCT pen. The option key 803 may be a hardware key, a capacitive key, or any other suitable type of key for causing the option screen 809 to be displayed. The option key 803 may be located at a location on the electronic device 800 other than the side of the electronic device 800 including the display screen of the electronic device 800. Alternatively, the option key 803 may be located on the same side of the electronic device 800 including the display screen of the electronic device 800. An edge of the predefined or specific area 801 may correspond to at least a portion of an edge of the display screen closest to the option key 803.

### E. Fifth Exemplary Implementation

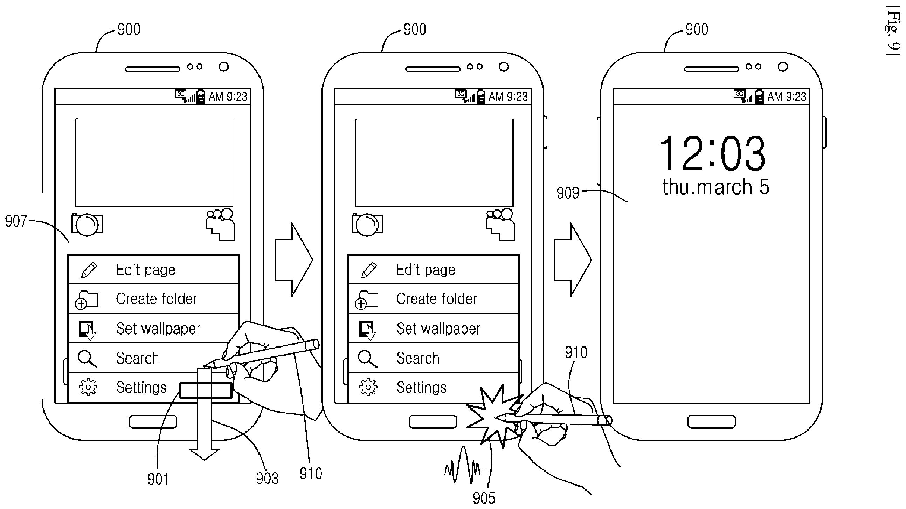

FIG. 9 illustrates a fifth exemplary implementation in which a back key is operated via an input using a hovering input according to the first exemplary embodiment.

Referring to FIG. 9, after generating a hovering input with an object 910 used for performing the hovering input on a predefined or specific area 901 associated with a back key 903, if the bezel is physically tapped 905 by the object 910 used for performing the hovering input within a predefined time determined by a timer, an electronic device 900 may then operate as if the back key was actuated. In this case, the actuation of the back key 903 causes the electronic device 900 to transition from an option screen 907 to a home screen 909. The operation associated with the back key 903 may be an operation of the OS or an application.

Here, the object 910 used for performing the hovering input may be a NCT pen. The back key 903 may be a hardware key, a capacitive key, or any other suitable type of key for causing the option screen 907 to be displayed. The back key 903 may be located at a location on the electronic device 900 other than the side of the electronic device 900 including the display screen of the electronic device 900. Alternatively, the back key 903 may be located on the same side of the electronic device 900 including the display screen of the electronic device 900. An edge of the predefined or specific area 901 may correspond to at least a portion of an edge of the display screen closest to the back key 903.

### 2) Second Exemplary Embodiment

A second exemplary embodiment is described below with reference to a sixth exemplary implementation. In the second exemplary embodiment, a hardware module of an electronic device is operated via an input using a hovering input. An example of the hardware module includes a camera.

### A. Sixth Exemplary Implementation

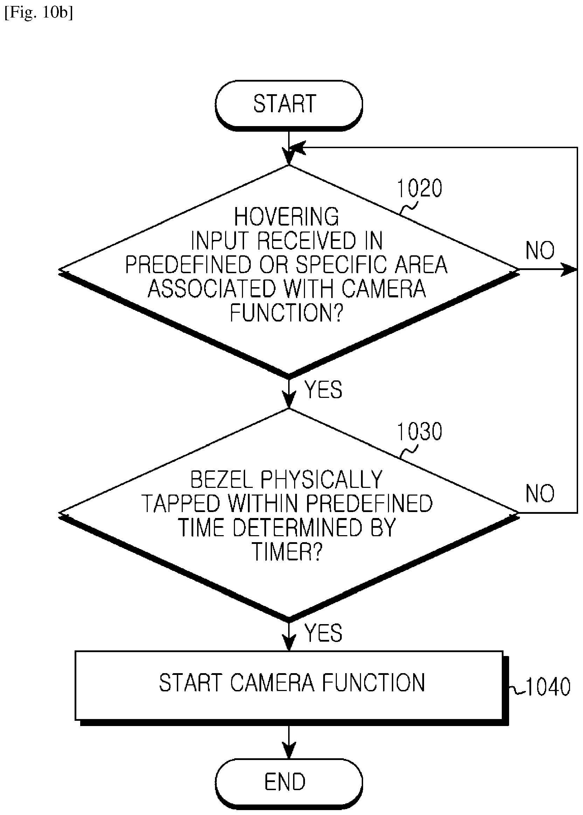

FIG. 10A illustrates a sixth exemplary implementation in which a camera function is operated via an input using a hovering input according to the second exemplary embodiment. FIG. 10B illustrates a method of the sixth exemplary implementation in which the camera function is operated via the input using the hovering input according to the second exemplary embodiment.

Referring to FIGS. 10A and 10B, after generating a hovering input with an object 1010 used for performing the hovering input on a predefined or specific area 1001 associated with a camera function in step 1020, if the bezel is physically tapped 1005 by the object 1010 used for performing the hovering input within a predefined time determined by a timer in step 1030, an electronic device 1000 may then start the camera function 1007 in step 1040. Here, the predefined or specific area 1001 may be adjacent to a camera lens. Thus, the predefined or specific area 1001 may be adjacent to an exposed hardware module of the electronic device 1000. Herein, step 1020 corresponds to step 301 of FIG. 3. Also, step 1030 corresponds to steps 303 to 311 of FIG. 3. Further, step 1040 corresponds to step 313 of FIG. 3.

Here, the object 1010 used for performing the hovering input may be a NCT pen. In addition, the exposed hardware module of the electronic device 1000 may be located at a location on the electronic device 1000 other than the side of the electronic device 1000 including the display screen of the electronic device 1000. Alternatively, the exposed hardware module of the electronic device 1000 may be located on the same side of the electronic device 1000 including the display screen of the electronic device 1000. An edge of the predefined or specific area 1001 may correspond to at least a portion of an edge of the display screen closest to the exposed hardware module of the electronic device 1000.

### 3) Third Exemplary Embodiment

A third exemplary embodiment is described below with reference to seventh through eleventh exemplary implementations. In the third exemplary embodiment, various application functions are initiated via an input using a hovering input. An example of the application functions include Uniform Resource Locator (URL) address bar of a browser, a search bar of a phonebook, a search bar of an IM application, a back page function of a browser, and a forward page function of a browser.

### A. Seventh Exemplary Implementation

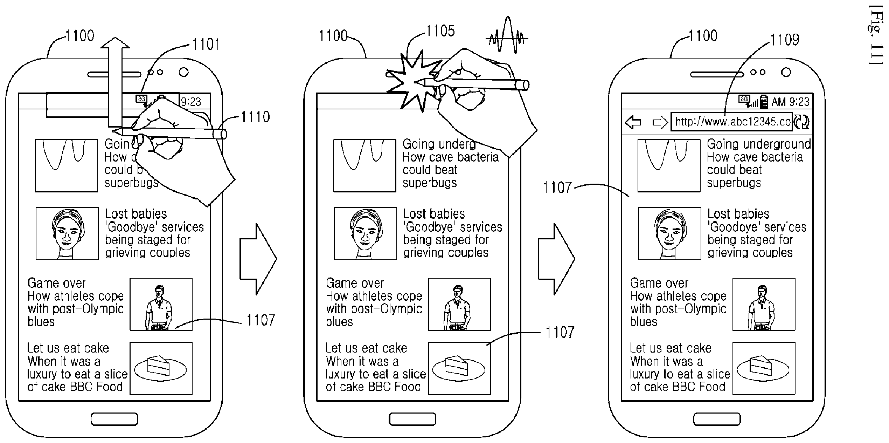

FIG. 11 illustrates a seventh exemplary implementation in which a URL address bar of a browser is displayed in response to an input using a hovering input according to the third exemplary embodiment.

Referring to FIG. 11, after generating a hovering input with an object 1110 used for performing the hovering input on a predefined or specific area 1101 associated with a function to display a URL address bar 1109 while a browser 1107 is displayed, if the bezel is physically tapped 1105 by the object 1110 used for performing the hovering input within a predefined time determined by a timer, an electronic device 1100 may then display the URL address bar 1109. Here, if nothing is input to the URL address bar 1109 within a preset time, the display of the URL address bar 1109 may be discontinued. An edge of the predefined or specific area 1101 may correspond to at least a portion of an edge of the display screen, such as a top edge of the display screen.

Here, the object 1110 used for performing the hovering input may be a NCT pen. Also, the predefined or specific area 1101 that corresponds to function to display the URL address bar 1109 may only be present while the browser 1107 is displayed. Alternatively, the predefined or specific area 1101 that corresponds to the function to display the URL address bar 1109 may be present while the browser 1107 is not displayed. In this case, the ancillary hovering input may cause the browser to be displayed in addition to the URL address bar 1109.

### B. Eighth Exemplary Implementation

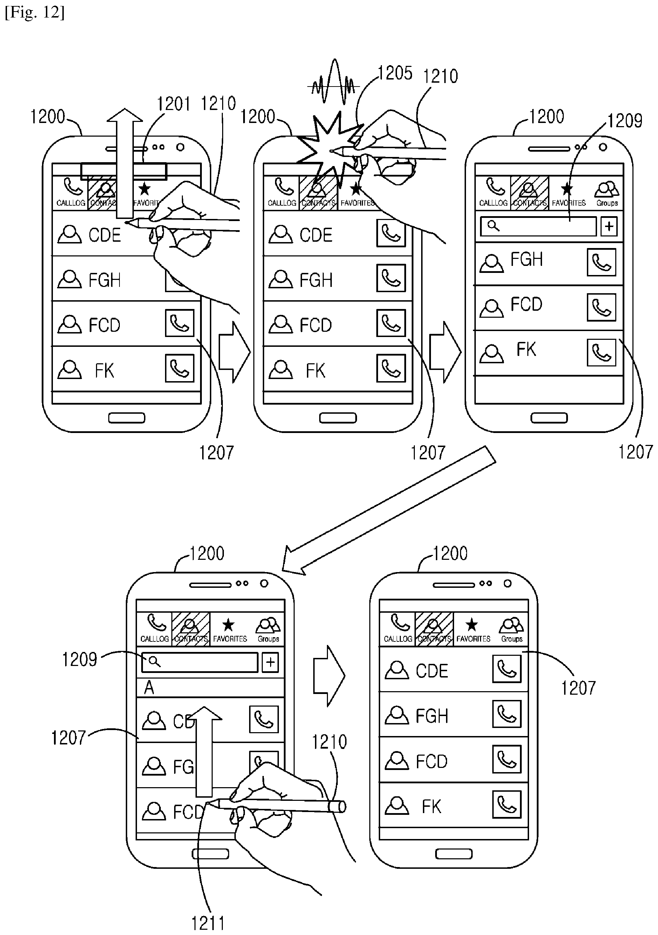

FIG. 12 illustrates an eighth exemplary implementation in which a search bar of a phonebook is displayed in response to an input using a hovering input according to the third exemplary embodiment.

Referring to FIG. 12, after generating a hovering input with an object 1210 used for performing the hovering input on the predefined or specific area 1201 associated with a function to display a search bar 1209 while a phonebook 1207 is displayed, if the bezel is physically tapped 1205 by the object 1210 used for performing the hovering input within a predefined time determined by a timer, an electronic device 1200 may then display the search bar 1209. Here, if an input 1211 to scroll the phonebook 1207 is received while the search bar 1209 is displayed, the display of the search bar 1209 may be discontinued. Additionally or alternatively, if nothing is input to the search bar 1209 within a preset time, the display of the search bar 1209 may be discontinued. Additionally or alternatively, if the electronic device 1200 is configured to display the search bar 1209 when the phonebook 1207 is scrolled up, the ancillary hovering input enables the search bar 1209 to be displayed without scrolling up the phonebook 1207. An edge of the predefined or specific area 1201 may correspond to at least a portion of an edge of the display screen, such as a top edge of the display screen.

Here, the object 510 used for performing the hovering input may be a NCT pen. Also, the predefined or specific area 1201 that corresponds to the function to display the search bar 1209 may only be present while the phonebook 1207 is displayed. Alternatively, the predefined or specific area 1201 that corresponds to the function to display the search bar 1209 may be present while the phonebook 1207 is not displayed. In this case, the ancillary hovering input may cause the phonebook 1207 to be displayed in addition to the search bar 1209.

### C. Ninth Exemplary Implementation

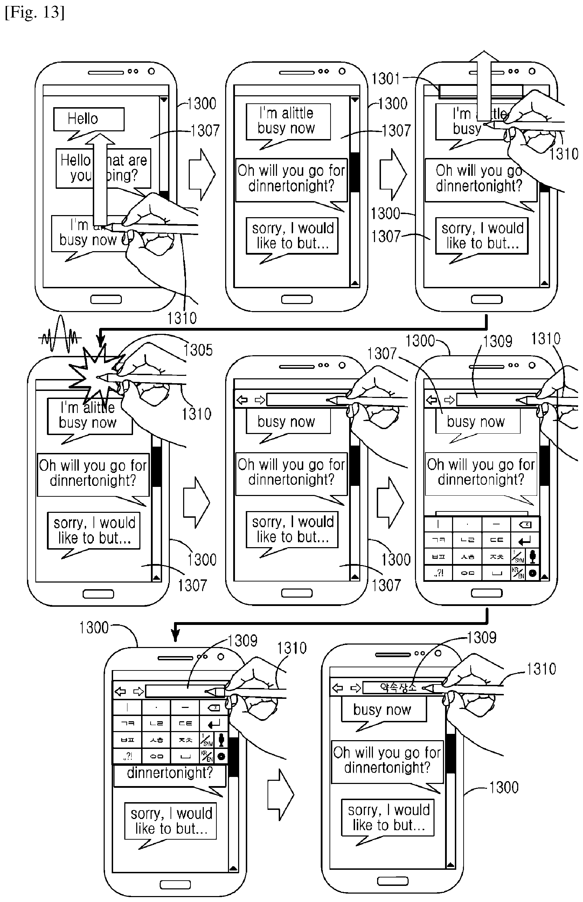

FIG. 13 illustrates a ninth exemplary implementation in which a search bar of an IM application is displayed in response to an input using a hovering input according to the third exemplary embodiment.

Referring to FIG. 13, while an IM application 1307 is displayed, if an input to scroll the IM history is received, the IM history may be scrolled without causing a search bar 1309 to be displayed. However, after generating a hovering input with an object 1310 used for performing the hovering input used for performing the hovering input on a predefined or specific area 1301 associated with a function to display a search bar 1309 while the IM application 1307 is displayed, if the bezel is physically tapped 1305 by the object 1310 used for performing the hovering input within a predefined time determined by a timer, an electronic device 1300 may then display the search bar 1309. The object 1310 used for performing the hovering input may then be used to enter search information into the search bar 1309. Alternatively, if nothing is input to the search bar 1309 within a preset time, the display of the search bar 1309 may be discontinued. An edge of the predefined or specific area 1301 may correspond to at least a portion of an edge of the display screen, such as a top edge of the display screen.

Here, the object 1310 used for performing the hovering input may be a NCT pen. Also, the predefined or specific area 1301 that corresponds to the function to display the search bar 1309 may only be present while the IM application 1307 is displayed. Alternatively, the predefined or specific area 1301 that corresponds to the function to display the search bar 1309 may be present while the IM application 1307 is not displayed. In this case, the ancillary hovering input may cause the IM application 1307 to be displayed in addition to the search bar 1309.

### D. Tenth Exemplary Implementation

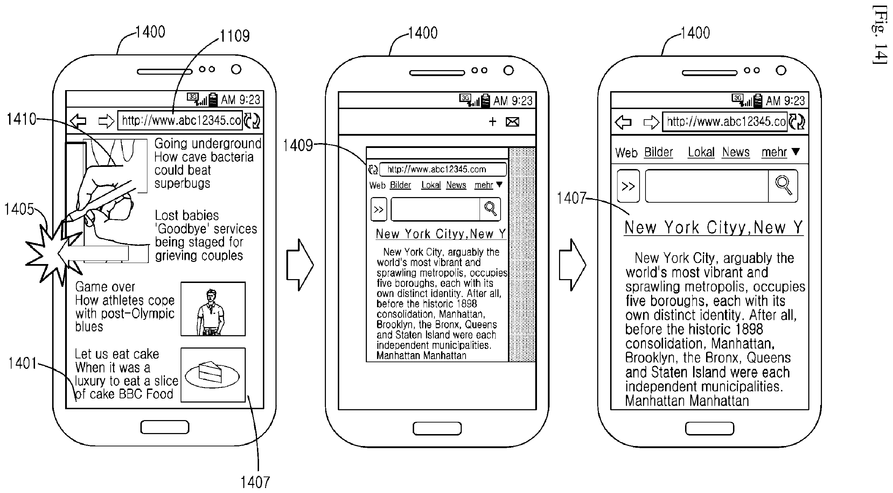

FIG. 14 illustrates a tenth exemplary implementation in which a back page function of a browser is performed in response to an input using a hovering input according to the third exemplary embodiment.

Referring to FIG. 14, after generating a hovering input with an object 1410 used for performing the hovering input on a predefined or specific area 1401 associated with a back page function while a browser 1407 is displayed, if the bezel is physically tapped 1405 by the object 1410 used for performing the hovering input within a predefined time determined by a timer, an electronic device 1400 may then perform a back page function 1409 and display a previously displayed page on the browser 1407. An edge of the predefined or specific area 1401 may correspond to at least a portion of an edge of the display screen, such as a left edge of the display screen.

Here, the object 1410 used for performing the hovering input may be a NCT pen. Also, the predefined or specific area 1401 that corresponds to the back page function may only be present while the browser 1407 is displayed.

### E. Eleventh Exemplary Implementation

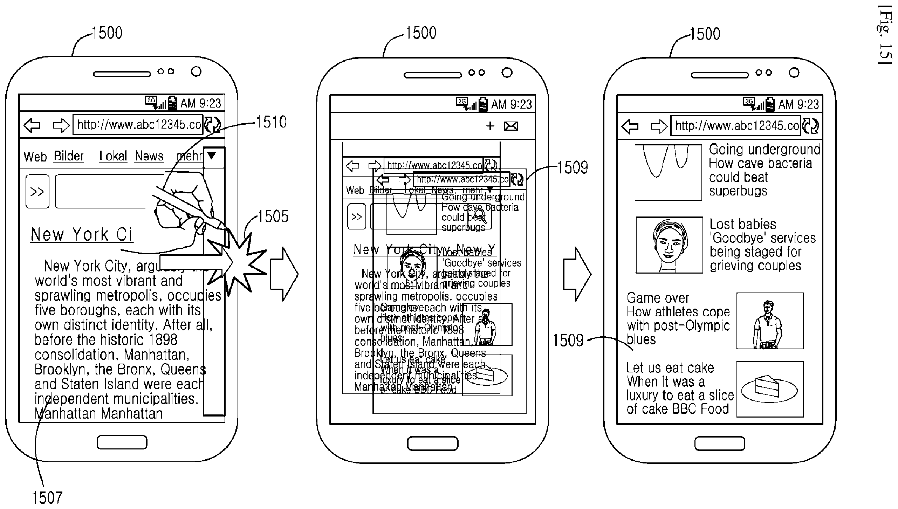

FIG. 15 illustrates an eleventh exemplary implementation in which a forward page function of a browser is performed in response to an input using a hovering input according to the third exemplary embodiment.

Referring to FIG. 15, after generating a hovering input with an object 1510 used for performing the hovering input on a predefined or specific area 1501 associated with a forward page function while a browser 1507 is displayed, if the bezel is physically tapped 1505 by the object 1510 used for performing the hovering input within a predefined time determined by a timer, an electronic device 1500 may then perform a forward page function 1509 and display a next page on the browser 1507. An edge of the predefined or specific area 1501 may correspond to at least a portion of an edge of the display screen, such as a right edge of the display screen.

Here, the object 1510 used for performing the hovering input may be a NCT pen. Also, the predefined or specific area 1501 that corresponds to the forward page function may only be present while the browser 1507 is displayed.

At this point it should be noted that the various embodiments as described above typically involve the processing of input data and the generation of output data to some extent. This input data processing and output data generation may be implemented in hardware, or software in combination with hardware. For example, specific electronic components may be employed in an electronic device or similar or related circuitry for implementing the functions associated with the various embodiments as described above. Alternatively, one or more processors operating in accordance with stored instructions (i.e., code) may implement the functions associated with the various embodiments as described above. If such is the case, it is within the scope of the present disclosure that such instructions may be stored on one or more non-transitory processor readable mediums. Examples of the non-transitory processor readable mediums include ROM, RAM, Compact Disc (CD)-ROMs, magnetic tapes, floppy disks, and optical data storage units. The non-transitory processor readable mediums can also be distributed over network coupled computer systems so that the instructions are stored and executed in a distributed fashion. Also, functional computer programs, instructions, and instruction segments for accomplishing the present invention can be easily construed by programmers skilled in the art to which the present invention pertains.

## Claims

1. A method for receiving an input, the method comprising:
determining (301) whether a hovering input is received in a predefined area within a display, the predefined area being adjacent to a hardware module of an electronic device;
entering (303) an input monitoring mode enabling reception of a user input for a predefined amount of time, when the hovering input is detected in the predefined area of the display, and starting a timer;
determining whether the user input is received from at least one sensor of the electronic device within the predefined amount of time determined by the timer;
when the user input is received from at least one sensor of the electronic device within the predefined amount of time determined by the timer:
determining (311) whether the user input satisfies at least one predefined condition corresponding to the at least one sensor;
when the user input satisfies the at least one predefined condition corresponding to the at least one sensor:
cancelling the input monitoring mode; and
performing (313) a function corresponding to the hardware module adjacent to the predefined area.

2. The method of claim 1, wherein the determining of whether the hovering input is received comprises determining whether an object is detected within a predefined proximity range above the display of the electronic device.

3. The method of claim 1, wherein the entering of the input monitoring mode comprises indicating an entry of the input monitoring mode based on at least one of a display, a sound or a vibration when the timer is started.

4. The method of claim 1, wherein at least one side of the predefined area is adjacent to an edge of the electronic device.

5. The method of claim 1, wherein at least one side of the predefined area is adjacent to the hardware module.

6. The method of claim 1, wherein the entering of the input monitoring mode comprises displaying the predefined area by visually distinguishing from other area in the input monitoring mode.

7. The method of claim 6, wherein the at least one sensor comprises at least one of an accelerometer, a gyroscope, a vibration sensor, a microphone, a light sensor, a touch panel, an electromagnetic digitizer, a proximity sensor, a illumination sensor, a motion sensor, a camera image sensor, an InfraRed (IR) sensor, and a digital compass.

8. The method of claim 1, wherein the function corresponding to the hardware module adjacent to the predefined area comprises a function corresponding to at least one of an operation associated with a volume key, an operation associated with a power key, an operation associated with a back key, an operation associated with an option key, an operation to display a Uniform Resource Locator (URL) address bar of a browser, an operation to display a search bar of a phonebook, an operation to display a search bar of an Instant Messaging (IM) application, an operation to perform a back page function of the browser, and an operation to perform a forward page function of the browser.

9. An electronic device for receiving an input, the electronic device comprising:
a display;
a hardware module; and
at least one processor configured to:
determine (301) whether a hovering input is received in a predefined area within the display, the predefined area being adjacent to the hardware module of the electronic device,
enter (303) an input monitoring mode enabling reception of a user input for a predefined amount of time, when the hovering input is detected in the predefined area of the display, and start a timer,
determine whether the user input is received from at least one sensor of the electronic device within the predefined amount of time determined by the timer, when the user input is received from at least one sensor of the electronic device within the predefined amount of time determined by the timer:
determine (311) whether the user input satisfies at least one predefined condition corresponding to the at least one sensor, when the user input satisfies the at least one predefined condition corresponding to the at least one sensor:
cancel the input monitoring mode, and
perform (313) a function corresponding to the hardware module adjacent to the predefined area.

10. The electronic device of claim 9, wherein the at least one processor, when determining whether the hovering input is received, is configured to determine whether an object is detected within a predefined proximity range above the display of the electronic device.

11. The electronic device of claim 9, wherein the at least one processor is configured to indicate an entry of the input monitoring mode based on at least one of a display, a sound or a vibration when the timer is started.

12. The electronic device of claim 9, wherein the at least one processor is configured to display the predefined area by visually distinguishing from other area in the input monitoring mode.

13. The electronic device of claim 9, wherein the at least one sensor comprises at least one of an accelerometer, a gyroscope, a vibration sensor, a microphone, a light sensor, a touch panel, an electromagnetic digitizer, a proximity sensor, a illumination sensor, a motion sensor, a camera image sensor, an InfraRed (IR) sensor, and a digital compass.

## Patentansprüche

1. Verfahren zum Empfang einer Eingabe, wobei das Verfahren Folgendes umfasst:
Bestimmen (301), ob in einem vordefinierten Bereich einer Anzeige eine Schwebeeingabe empfangen wird, wobei der vordefinierte Bereich an ein Hardware-Modul eines elektronischen Geräts angrenzt;
Eintreten (303) in einen Eingabeüberwachungsmodus, der den Empfang einer Benutzereingabe während eines vordefinierten Zeitraums ermöglicht, wenn in dem vordefinierten Bereich der Anzeige eine Schwebeeingabe erfasst wird, und Starten eines Timers;
Bestimmen, ob innerhalb des von dem Timer bestimmten vordefinierten Zeitraums die Benutzereingabe aus wenigstens einem Sensor des elektronischen Geräts empfangen wird;
wenn innerhalb des von dem Timer bestimmten vordefinierten Zeitraums die Benutzereingabe aus wenigstens einem Sensor des elektronischen Geräts empfangen wird:
Bestimmen (311), ob die Benutzereingabe wenigstens eine vordefinierte Bedingung, die dem wenigstens einen Sensor entspricht, erfüllt;
wenn die Benutzereingabe die wenigstens eine vordefinierte Bedingung, die dem wenigstens einen Sensor entspricht, erfüllt:
Aufheben des Eingabeüberwachungsmodus und Durchführen (313) einer Funktion entsprechend dem an den vordefinierten Bereich angrenzenden Hardware-Modul.

2. Verfahren nach Anspruch 1, wobei das Bestimmen, ob die Schwebeeingabe empfangen wird, das Bestimmen, ob ein Objekt innerhalb eines vordefinierten Nähebereichs über der Anzeige des elektronischen Geräts erfasst wird, umfasst.

3. Verfahren nach Anspruch 1, wobei das Eintreten in den Eingabeüberwachungsmodus das Anzeigen eines Eintretens in den Eingabeüberwachungsmodus basierend auf einer visuellen Anzeige, einem Ton und/oder einer Vibration, wenn der Timer gestartet wird, umfasst.

4. Verfahren nach Anspruch 1, wobei wenigstens eine Seite des vordefinierten Bereichs an eine Kante des elektronischen Geräts angrenzt.

5. Verfahren nach Anspruch 1, wobei wenigstens eine Seite des vordefinierten Bereichs an das Hardware-Modul angrenzt.

6. Verfahren nach Anspruch 1, wobei das Eintreten in den Eingabeüberwachungsmodus das Darstellen des vordefinierten Bereichs durch visuelles Abheben von anderen Bereichen im Eingabeüberwachungsmodus umfasst.

7. Verfahren nach Anspruch 6, wobei der wenigstens eine Sensor wenigstens eines der Folgenden umfasst: einen Beschleunigungsmesser, ein Gyroskop, einen Vibrationssensor, ein Mikrofon, einen Lichtsensor, eine Berührungstafel, einen elektromagnetischen Digitalisierer, einen Näherungssensor, einen Beleuchtungssensor, einen Bewegungssensor, einen InfraRot-Sensor (IR-Sensor) und einen digitalen Kompass.

8. Verfahren nach Anspruch 1, wobei die Funktion entsprechend dem an den vordefinierten Bereich angrenzenden Hardware-Modul eine Funktion umfasst, die wenigstens einem der Folgenden entspricht: einem Vorgang, der einer Lautstärketaste zugeordnet ist, einem Vorgang, der einer Einschalttaste zugeordnet ist, einem Vorgang, der einer Zurücktaste zugeordnet ist, einem Vorgang, der einer Optionstaste zugeordnet ist, einem Vorgang zum Anzeigen einer URL-Adressleiste (Uniform Resource Locator) eines Browsers, einem Vorgang zum Anzeigen einer Suchleiste eines Telefonbuchs, einem Vorgang zum Anzeigen einer Suchleiste einer Instant-Messaging-Anwendung (IM), einen Vorgang zum Durchführen einer Funktion des Browsers zum Zurückblättern zu der vorherigen Seite, und einen Vorgang zum Durchführen einer Funktion des Browsers zum Vorblättern zu der nächsten Seite.

9. Elektronisches Gerät zum Empfang einer Eingabe, wobei das elektronische Gerät Folgendes umfasst:
eine Anzeige;
ein Hardware-Modul; und
wenigstens einen Prozessor, der konfiguriert ist zum:
Bestimmen (301), ob in einem vordefinierten Bereich der Anzeige eine Schwebeeingabe empfangen wird, wobei der vordefinierte Bereich an das Hardware-Modul des elektronischen Geräts angrenzt;
Eintreten (303) in einen Eingabeüberwachungsmodus, der den Empfang einer Benutzereingabe während eines vordefinierten Zeitraums ermöglicht, wenn in dem vordefinierten Bereich der Anzeige eine Schwebeeingabe erfasst wird, und Starten eines Timers;
Bestimmen, ob innerhalb des von dem Timer bestimmten vordefinierten Zeitraums die Benutzereingabe aus wenigstens einem Sensor des elektronischen Geräts empfangen wird;
wenn innerhalb des von dem Timer bestimmten vordefinierten Zeitraums die Benutzereingabe aus wenigstens einem Sensor des elektronischen Geräts empfangen wird:
Bestimmen (311), ob die Benutzereingabe wenigstens eine vordefinierte Bedingung, die dem wenigstens einen Sensor entspricht, erfüllt;
wenn die Benutzereingabe die wenigstens eine vordefinierte Bedingung, die dem wenigstens einen Sensor entspricht, erfüllt:
Aufheben des Eingabeüberwachungsmodus und Durchführen (313) einer Funktion entsprechend dem an den vordefinierten Bereich angrenzenden Hardware-Modul.

10. Elektronisches Gerät nach Anspruch 9, wobei der wenigstens eine Prozessor beim Bestimmen, ob die Schwebeeingabe empfangen wird, konfiguriert ist zum Bestimmen, ob ein Objekt innerhalb eines vordefinierten Nähebereichs über der Anzeige des elektronischen Geräts erfasst wird.

11. Elektronisches Gerät nach Anspruch 9, wobei der wenigstens eine Prozessor konfiguriert ist zum Anzeigen eines Eintretens in den Eingabeüberwachungsmodus basierend auf einer visuellen Anzeige, einem Ton und/oder einer Vibration, wenn der Timer gestartet wird.

12. Elektronisches Gerät nach Anspruch 9, wobei der wenigstens eine Prozessor konfiguriert ist zum Darstellen des vordefinierten Bereichs durch visuelles Abheben von anderen Bereichen im Eingabeüberwachungsmodus.

13. Elektronisches Gerät nach Anspruch 9, wobei der wenigstens eine Sensor wenigstens eines der Folgenden umfasst: einen Beschleunigungsmesser, ein Gyroskop, einen Vibrationssensor, ein Mikrofon, einen Lichtsensor, eine Berührungstafel, einen elektromagnetischen Digitalisierer, einen Näherungssensor, einen Beleuchtungssensor, einen Bewegungssensor, einen InfraRot-Sensor (IR-Sensor) und einen digitalen Kompass.

## Revendications

1. Procédé de réception d'une entrée, le procédé comprenant les opérations consistant à :
déterminer (301) si une entrée en survol est reçue dans une zone prédéfinie au sein d'un écran, la zone prédéfinie étant adjacente à un module matériel d'un appareil électronique,
passer (303) à un mode de surveillance d'entrée permettant la réception d'une entrée utilisateur pendant une durée prédéfinie, lorsque l'entrée en survol est détectée dans la zone prédéfinie de l'écran, et démarrer une minuterie,
déterminer si l'entrée utilisateur est reçue en provenance d'au moins un capteur de l'appareil électronique pendant la durée prédéfinie déterminée par la minuterie,
lorsque l'entrée utilisateur est reçue en provenance d'au moins un capteur de l'appareil électronique pendant la durée prédéfinie déterminée par la minuterie :
déterminer (311) si l'entrée utilisateur satisfait à au moins une condition prédéfinie correspondant à l'au moins un capteur,
lorsque l'entrée utilisateur satisfait à l'au moins une condition prédéfinie correspondant à l'au moins un capteur :
annuler le mode de surveillance d'entrée, et réaliser (313) une fonction correspondant au module matériel adjacent à la zone prédéfinie.

2. Procédé selon la revendication 1, dans lequel la détermination de la réception de l'entrée en survol comprend la détermination du fait qu'un objet est détecté au sein d'une plage de proximité prédéfinie au-dessus de l'écran de l'appareil électronique.

3. Procédé selon la revendication 1, dans lequel le passage au mode de surveillance d'entrée comprend une indication du passage au mode de surveillance d'entrée reposant sur un visuel, un son et/ou des vibrations, une fois que la minuterie a démarré.

4. Procédé selon la revendication 1, dans lequel au moins un côté de la zone prédéfinie est adjacent à un bord de l'appareil électronique.

5. Procédé selon la revendication 1, dans lequel au moins un côté de la zone prédéfinie est adjacent au module matériel.

6. Procédé selon la revendication 1, dans lequel le passage au mode de surveillance d'entrée comprend la représentation de la zone prédéfinie par une distinction visuelle vis-à-vis de l'autre zone en mode de surveillance d'entrée.

7. Procédé selon la revendication 6, dans lequel l'au moins un capteur comprend au moins un élément parmi les suivants : un accéléromètre, un gyroscope, un détecteur de vibrations, un microphone, un capteur de luminosité, un pavé tactile, un numériseur électromagnétique, un détecteur de présence, un détecteur d'illumination, un détecteur de mouvement, un capteur d'image de caméra, un capteur infrarouge (IR) et une boussole numérique.

8. Procédé selon la revendication 1, dans lequel la fonction correspondant au module matériel adjacent à la zone prédéfinie comprend une fonction correspondant à au moins un élément parmi les suivants : une opération associée à un bouton de volume, une opération associée à un bouton de mise en marche, une opération associée à un bouton de retour, une opération associée à un bouton d'option, une opération visant à afficher une barre d'adresse URL (Uniform Resource Locator) d'un navigateur, une opération visant à afficher une barre de recherche d'un annuaire téléphonique, une opération visant à afficher une barre de recherche d'une application de messagerie instantanée, une opération visant à réaliser une fonction « page précédente » sur le navigateur, et une opération visant à réaliser une fonction « page suivante » sur le navigateur.

9. Appareil électronique permettant de recevoir une entrée, l'appareil électronique comprenant :
un écran,
un module matériel, et
au moins un processeur conçu pour :
déterminer (301) si une entrée en survol est reçue dans une zone prédéfinie au sein de l'écran, la zone prédéfinie étant adjacente au module matériel de l'appareil électronique,
passer (303) à un mode de surveillance d'entrée permettant la réception d'une entrée utilisateur pendant une durée prédéfinie, lorsque l'entrée en survol est détectée dans la zone prédéfinie de l'écran, et démarrer une minuterie,
déterminer si l'entrée utilisateur est reçue en provenance d'au moins un capteur de l'appareil électronique pendant la durée prédéfinie déterminée par la minuterie,
lorsque l'entrée utilisateur est reçue en provenance d'au moins un capteur de l'appareil électronique pendant la durée prédéfinie déterminée par la minuterie :
déterminer (311) si l'entrée utilisateur satisfait à au moins une condition prédéfinie correspondant à l'au moins un capteur,
lorsque l'entrée utilisateur satisfait à l'au moins une condition prédéfinie correspondant à l'au moins un capteur :
annuler le mode de surveillance d'entrée et réaliser (313) une fonction correspondant au module matériel adjacent à la zone prédéfinie.

10. Appareil électronique selon la revendication 9, dans lequel, lorsqu'il est déterminé si l'entrée en survol est reçue, l'au moins un processeur est conçu pour déterminer si un objet est détecté au sein d'une plage de proximité prédéfinie au-dessus de l'écran de l'appareil électronique.

11. Appareil électronique selon la revendication 9, dans lequel l'au moins un processeur est conçu pour indiquer un passage au mode de surveillance d'entrée au moyen d'un visuel, d'un son et/ou de vibrations, une fois que la minuterie a démarré.

12. Appareil électronique selon la revendication 9, dans lequel l'au moins un processeur est conçu pour représenter la zone prédéfinie par une distinction visuelle vis-à-vis de l'autre zone en mode de surveillance d'entrée.

13. Appareil électronique selon la revendication 9, dans lequel l'au moins un capteur comprend au moins un élément parmi les suivants : un accéléromètre, un gyroscope, un détecteur de vibrations, un microphone, un capteur de luminosité, un pavé tactile, un numériseur électromagnétique, un détecteur de présence, un détecteur d'illumination, un détecteur de mouvement, un capteur d'image de caméra, un capteur infrarouge (IR) et une boussole numérique.
